Europäisches Patentamt

European Patent Office

Office européen des brevets

(11) Publication number: **0 171 935**
**B1**

(12) **EUROPEAN PATENT SPECIFICATION**

(45) Date of publication of patent specification: **24.10.90**

(51) Int. Cl.⁵: **C 08 L 9/06,** B 60 C 1/00

(21) Application number: **85305108.4**

(22) Date of filing: **17.07.85**

(54) **Tread rubber composition.**

(30) Priority: **18.07.84 JP 148866/84**
**05.10.84 JP 208305/84**

(43) Date of publication of application:
**19.02.86 Bulletin 86/08**

(45) Publication of the grant of the patent:
**24.10.90 Bulletin 90/43**

(84) Designated Contracting States:
**DE FR GB IT**

(56) References cited:
**EP-A-0 074 233**
**FR-A-1 414 444**
**GB-A- 960 194**
**GB-A-2 068 979**
**US-A-4 398 582**

(73) Proprietor: **Bridgestone Corporation**
**10-1, Kyobashi 1-Chome Chuo-Ku**
**Tokyo 104 (JP)**

(73) Proprietor: **JAPAN SYNTHETIC RUBBER CO.,**
**LTD.**
**11-24, Tsukiji-2-chome Chuo-ku**
**Tokyo 104 (JP)**

(72) Inventor: **Fujimaki, Tatsuo**
**613 Shinmusashino Sky Heights, 203 Fujimi-cho**
**3-chome, Higashimurayama City, Tokyo (JP)**
Inventor: **Tsutsumi, Fumio**
**24-17, Hagigaoka-Cho**
**Yokhaichi City, Mie Prefecture (JP)**
Inventor: **Sakakibara, Mitsuhiko**
**260-595, Heizushin-Machi**
**Yokkaichi City, Mie Prefecture (JP)**
Inventor: **Fujinaga, Yoshihisa**
**1, Morigayama-Cho**
**Yokkaichi City, Mie Prefecture (JP)**
Inventor: **Oshima, Noburu**
**202-7, Minamihorie-Cho**
**Suzuka City, Mie Prefecture (JP)**

(74) Representative: **Whalley, Kevin et al**
**MARKS & CLERK 57/60 Lincoln's Inn Fields**
**London WC2A 3LS (GB)**

Courier Press, Leamington Spa, England.

## EP 0 171 935 B1

**Description**

This invention relates to a tread rubber composition, and more particularly to a tread rubber composition for high-performance racing tires containing a copolymer of an aromatic vinyl compound and a conjugated diene and having a large hysteresis loss, improving gripping force on the road surface, good strength at break and wear resistance, good heat resistance and small temperature dependence of dynamic modulus.

The term "high performance racing tire" as used herein means racing tires for two-wheeled and four-wheeled vehicles.

In order to enhance the gripping force on the road surface of racing tires, butyl rubber having a large hysteresis loss, halogenated butyl rubber, and emulsion-polymerized styrene-butadiene copolymer rubber having a high content of bound styrene have hitherto been used in the treads of such tires.

However, the rubber materials having a large hysteresis loss such as butyl rubber have a poor covulcanization property with diene rubber and strength at break as compared with diene rubbers such as high-cis polyisoprene rubber, natural rubber, high-cis polybutadiene rubber, and emulsion-polymerized styrene-butadiene copolymer rubber. Further, the emulsion-polymerized styrene-butadiene copolymer rubber having a high content of bound styrene frequently causes blow-outs under severe conditions as in racing and is therefore not satisfactory.

Tread compositions comprising as a rubber component at least 10% of a copolymer of an aromatic vinyl compound and a conjugated diene in certain monomer ratios, obtained by polymerisation in a hydrocarbon solvent using an organolithium polymerisatin initiator are already known from GB—A—2 068 979, US—A—4 398 582 and EP—A1—0 074 233.

The present invention aims to overcome, or at least mitigate, the aforementioned problems of the prior art and to provide a tread rubber composition particularly for high-performance racing tires having an improved covulcanization property between rubber components, a large hysteresis loss, good heat resistance, good strength at break and wear resistance and small temperature dependence of dynamic modulus.

The present inventors have made various studies in order to meet the above problems and have found that a rubber composition comprising a particular copolymer of an aromatic vinyl compound and a conjugated diene achieves a satisfactory result.

According to the invention, there is provided a tread rubber composition for high performance racing tires comprising, as a rubber component, at least 10% by weight of an oil-extended copolymer of an aromatic vinyl compound and a conjugated diene, wherein said oil-extended copolymer has a bound aromatic vinyl content of 10—50% by weight and a vinyl bond unit content in the entire diene polymerized portion of 30—80%, and wherein said oil-extended copolymer is obtained by:

(a) copolymerizing an aromatic vinyl compound and a conjugated diene in the presence of a hydrocarbon solvent and an ether or tertiary amine using an organolithium compound as a polymerization initiator, and

(b) adding to the resulting copolymer of (a), prior to kneading, at least 30% by weight of an extender oil, wherein said tread rubber composition is obtained by adding, during kneading, additional extender oil such that the resulting tread rubber composition contains a total of 50—200 parts by weight of an extender oil based on 100 parts by weight of the rubber component.

The copolymer of an aromatic vinyl compound and a conjugated diene to be used in the invention is a copolymer obtained by copolymerizing the aromatic vinyl compound with the diene compound and is referred to as an aromatic vinyl·diene copolymer hereinafter.

The aromatic vinyl compound may be suitably styrene, p-methylstyrene, m-methylstyrene, p-tert-butylstyrene, α-methylstyrene, chloromethyl-styrene, or vinyl toluene. Among these, styrene, p-methyl-styrene and α-methylstyrene are preferred. Styrene is particularly preferred.

The diene compound may be suitably butadiene, isoprene, pentadiene, or 2,3-dimethyl butadiene. Among these, butadiene is preferred.

According to the invention, the aromatic vinyl·diene copolymer may be blended with various diene rubbers. In particular, emulsion-polymerized styrene-butadiene copolymer rubber having a high content of bound styrene, acrylonitrile-butadiene copolymer rubber, and chloroprene rubber are preferred as diene rubbers having a glass transition temperature Tg of not less than −60°C. The emulsion-polymerized styrene-butadiene copolymer rubber having the high bound styrene content is most preferable in view of the gripping property and strength at break. In this case, the high bound styrene content means preferably 30—60%.

When the amount of the aromatic vinyl diene copolymer is less than 10% by weight of the total weight of rubber components, the effect of improving the wear resistance, heat resistance and gripping property is small. According to the invention, therefore, the amount of the aromatic vinyl·diene copolymer is required to be not less than 10% by weight and is preferably not less than 30% by weight.

In the aromatic vinyl·diene copolymer, a content of vinyl bond unit in the whole of the diene polymerized portion is within a range of 30—80%, preferably 35—75%. When the rate of vinyl bond unit is less than 30%, the heat resistance is poor and the temperature dependence of dynamic modulus is large, while when the rate of vinyl bond unit exceeds 80%, the strength at break is poor.

2

Further, the content of bound aromatic vinyl compound in the aromatic vinyl·diene copolymer is within a range of 10—50% by weight, preferably 15—40% by weight, more particularly 25—40% by weight. When the content of bound aromatic vinyl compound is less than 10%, the hysteresis loss is small and the strength at break is poor, while when the content of bound aromatic vinyl compound exceeds 50%, the block sequence of the bound aromatic vinyl compound increases to make the temperature dependence of dynamic modulus over a service temperature range (20—150°C) large and also the strength at break is poor.

In the diene rubber to be blended with the aromatic vinyl·diene copolymer, the glass transition temperature Tg is preferably not less than −60°C having regard to the desired wear resistance, heat resistance and gripping property.

The Mooney viscosity $(ML_{1+4}^{100°C})$ of the aromatic vinyl·diene copolymer is not critical, but is preferably within a range of 20—100, more preferably 30—80, as an oil extended rubber in view of the rupture properties and processability.

In order to provide a large hysteresis loss, the rubber composition contains 50—200 parts by weight of an extender oil based on 100 parts by weight of the rubber components excluding oil. When the amount of the extender oil exceeds 200 parts by weight, the strength at break and wear resistance are poor, while when the amount of extender oil is less than 50 parts by weight, the gripping force on the road surface is reduced. The amount of the extender oil is preferably 55—200 parts by weight, more particularly 60—170 parts by weight. The use of 80—170 parts by weight of aromatic oil is most preferable having regard to the desired gripping property on the road surface.

The extender oil is preferably an aromatic oil having a viscosity-gravity constant of 0.900—1.100, more preferably 0.920—0.990 as measured according to ASTM D2501.

In order to enhance the strength at break, the aromatic vinyl·diene copolymer is previously added with the extender oil corresponding to not less than 30% by weight of total oil to form an oil-extended aromatic vinyl·diene copolymer and then blended with the other diene rubber, if necessary. When the amount of the extender oil is less than 30% by weight, the strength at break lowers. Preferably, the amount of the extender oil added to the aromatic vinyl·diene copolymer is not less than 50% by weight of total oil.

As other additives, use may be made of for example carbon black, fillers, vulcanization accelerators, and vulcanizing agents.

In the rubber composition according to the invention, when the temperature dependence of dynamic modulus in the vulcanizate (G' 100°C/G' 20°C) is less than 0.20, the temperature dependence of strength at break and hysteresis loss may become too large, so that the performances may not be stably obtained over the service temperature range of 20—150°C.

The aromatic vinyl·diene copolymer according to the invention may be produced by various methods. As a typical example of the industrial method, 1,3-butadiene containing a small amount of 1,2-butadiene is copolymerized with an aromatic vinyl compound in a reaction tank or tower using an organolithium compound as an initiator in the presence of a hydrocarbon solvent and an ether or tertiary amine. In this case, a proper amount of silicon halide, adipic diester, alkylene carbonate, or divinyl benzene is added at a final stage of the copolymerization reaction, if necessary, to conduct the coupling reaction, whereby the resulting copolymer is modified. Alternatively, either the catalyst of the monomer or both may be further supplemented to the above reaction system.

The glass transition temperature Tg is defined by a temperature when changing the curve of heat capacity plotted against temperature measured by means of a DSC (differential scanning calorimeter).

The invention will be further described with reference to the following illustrative Examples.

The polymer used in each example is a sample obtained by the following method and has analytical results shown in Table 1.

Sample A

Into a reaction vessel of 20 l capacity provided with a stirrer and a jacket were continuously charged 20 g/min of butadiene containing 100 ppm of 1,2-butadiene and 10 g/min of styrene as a monomer, 150 g/min of cyclohexane as a solvent and a 1.5 g/min of tetrahydrofuran, and 0.043 g of n-butyllithium as a catalyst to 100 g of the monomer, during which the temperature of the reaction vessel was controlled to 70°C. At the top outlet of the reaction vessel, silicon tetrachloride was continuously added to the resulting reaction product at a rate of 1/4 mole per n-butyllithium, which was introduced into a second reaction vessel connected to the upper portion of the reaction vessel to conduct the coupling reaction. At the outlet of the second reaction vessel, 0.5 part by weight of di-tert-butyl-p-cresol and 37.5 parts by weight of aromatic oil were added based on 100 parts by weight of the rubber component, which was subjected to desolvating and drying treatments in usual manner to thereby obtain a polymer of a sample A.

Sample D

The polymerization reaction was conducted in the first reaction vessel according to the same compounding recipe as in the sample A, and further continued at 70°C in the second reaction vessel by continuously charging 15 g/min of butadiene and 7 g/min of styrene as a monomer without the coupling reaction. The resulting reaction product was added with 0.5 part by weight of di-tert-butyl-p-cresol and 37.5 parts by weight of aromatic oil based on 100 parts by weight of the rubber component at the outlet of the second reaction vessel and then subjected to desolvating and drying treatments in usual manner.

Samples G and H

The same procedure as in the sample A was repeated except that the amount of tetrahydrofuran used was changed.

Samples B, E and F

The same procedure as in the sample A was repeated except that the charging rate of the monomer was changed.

Sample C

The same procedure as in the sample A was repeated except that n-butyllithium was used in an amount of 0.032 g based on 100 g of the monomer and the coupling reaction was not conducted.

## Table 1

| Oil-extended polymer | Microstructure of polymer | | $ML(^{100°C}_{1+4})$ *2 |
|---|---|---|---|
| | vinyl bond % *1 | bound styrene % | |
| Sample A | 46 | 33 | 44 |
| Sample B | 45 | 38 | 45 |
| Sample C | 46 | 33 | 43 |
| Sample D | 45 | 33 | 47 |
| Sample E | 41 | 55 | 48 |
| Sample F | 56 | 5 | 51 |
| Sample G | 28 | 43 | 40 |
| Sample H | 85 | 30 | 42 |

*1 Rate of vinyl bond unit in the whole of butadiene polymerized portion

*2 Mooney viscosity of oil-extended polymer

Examples 1~12, Comparative Example 1

Rubber compositions were prepared from the aforementioned samples as shown in Table 1 according to a compounding recipe as shown in the following Table 2. Each of these rubber compositions was vulcanized under conditions of 145°C × 30 minutes and then the tensile strength, blow-out temperature, lap time on cart course test, wear resistance, tan δ and ratio of dynamic modulus (G' 100°C/20°C) were measured with respect to the resulting vulcanizate to obtain results as shown in the following Table 3.

Table 2

| | Part by weight |
|---|---|
| Polymer *1 | 100 |
| Aromatic oil *2 | as stated elsewhere |
| Carbon black HAF | 150 |
| Stearic acid | 2 |
| Zinc white | 3 |
| Antioxidant 810 NA *3 | 1 |
| Vulcanization accelerator DM *4 | 1.2 |
| Vulcanization accelerator DPG *5 | 0.6 |
| Sulfur | 1.5 |

*1 :  amount of polymer obtained by excluding oil from oil-extended polymer

*2 :  Sum of oil amount in oil-extended polymer and oil amount added in the kneading.

*3 :  N-phenyl-N'-isopropyl-p-phenylenediamine

*4 :  2,2'-dithio-bis-benzothiazole

*5 :  1,3-diphenylguanidine

5

Table 3

| | Aromatic vinyl·diene copolymer Sample | Aromatic vinyl·diene copolymer part *1 by weight | SBR T0120 *2 part *1 by weight | Total of aromatic oil *3 part by weight | Tensile strength *4 kgf/cm² | Blowout temperature *5 °C | Wear resistance *6 | Lap time *7 sec | tan δ *8 20°C | tan δ *8 100°C | G' *8 100°C/20°C |
|---|---|---|---|---|---|---|---|---|---|---|---|
| Example 1 | A | 70 | 30 | 150 | 132 | 214 | excellent | 34.26 | 0.45 | 0.32 | 0.24 |
| Example 2 | B | 70 | 30 | 150 | 128 | 210 | excellent | 34.38 | 0.44 | 0.31 | 0.23 |
| Example 3 | C | 70 | 30 | 150 | 135 | 211 | excellent | 34.42 | 0.45 | 0.31 | 0.24 |
| Example 4 | D | 70 | 30 | 150 | 127 | 208 | excellent | 34.01 | 0.44 | 0.32 | 0.23 |
| Example 5 | A | 20 | 80 | 150 | 136 | 213 | excellent | 34.31 | 0.45 | 0.32 | 0.21 |
| Example 6 | A | 70 | 30 | 80 | 162 | 215 | excellent | 34.72 | 0.45 | 0.32 | 0.22 |
| Example 7 | A | 100 | 0 | 150 | 135 | 217 | excellent | 34.25 | 0.45 | 0.32 | 0.24 |
| Example 8 | E | 70 | 30 | 150 | 125 | 192 | excellent | 35.48 | 0.50 | 0.35 | 0.18 |
| Example 9 | F | 70 | 30 | 150 | 136 | 185 | good | 35.72 | 0.41 | 0.30 | 0.24 |
| Example 10 | G | 70 | 30 | 150 | 120 | 188 | good | 34.75 | 0.44 | 0.28 | 0.17 |
| Example 11 | H | 70 | 30 | 150 | 96 | 216 | passable | 34.88 | 0.50 | 0.32 | 0.22 |
| Comparative Example 1 | A | 5 | 95 | 150 | 110 | 180 | passable | 36.02 | 0.45 | 0.32 | 0.22 |
| Example 12 | A | 70 | 30 | 40 | 160 | 213 | excellent | 35.28 | 0.45 | 0.32 | 0.22 |

*1 : amount of only polymer in oil-extended polymer

*2 : high styrene emulsion-polymerized styrene-butadiene copolymer rubber,
trade name, made by Japan Synthetic Rubber Co., Ltd. (Tg=-50°C)

*3 : sum of oil amount in oil extending and oil amount based on 100 parts by weight
of rubber component in kneading

*4 : according to JIS K-6301

*5 : measured by means of a Goodrich flexometer

*6 : evaluated by three stages of excellent, good and passable from worn appearance
after the running on a cart course (720 m) 10 times

*7 : best lap time in the running on a cart course (720 m) 10 times. The smaller
the lap time, the better the gripping property on road surface.

*8 : measured by means of a viscoelastic spectrometer of RMS 706,
made by Rheometric Corp., at a frequency of 15 Hz and a dynamic strain of 1%

EP 0 171 935 B1

As is apparent from Examples 1—12, particularly Examples 1—7, the rubber compositions have satisfactory heat resistance, wear resistance and gripping property on the road surface and may be suitably used as a tread rubber composition for high-performance and racing tires used under severe service conditions.

On the other hand, the rubber composition of Comparative Example 1 has a low blow-out temperature and poor heat resistance, wear resistance and gripping property on the road surface.

As mentioned above, according to the invention as claimed, the heat reistance, wear resistance and gripping property on the road surface are simultaneously satisfied in a tread rubber composition for high-performance racing tires used under severe service conditions.

**Claims**

1. A tread rubber composition for high performance racing tires comprising, as a rubber component, at least 10% by weight of an oil-extended copolymer of an aromatic vinyl compound and a conjugated diene, wherein said oil-extended copolymer has a bound aromatic vinyl content of 10—50% by weight and a vinyl bond unit content in the entire diene polymerized portion of 30—80%, and wherein said oil-extended copolymer is obtained by:

(a) copolymerizing an aromatic vinyl compound and a conjugated diene in the presnce of a hydrocarbon solvent and an ether or tertiary amine using an organolithium compound as a polymerization initiator, and

(b) adding to the resulting copolymer of (a), prior to kneading at least 30% by weight of an extender oil, wherein said tread rubber composition is obtained by adding, during kneading, additional extender oil such that the resulting tread rubber composition contains a total of 50—200 parts by weight of an extender oil based on 100 parts by weight of the rubber components.

2. A tread rubber composition as claimed in claim 1, characterized in that step (b) is carried out after copolymerization and before desolvation and drying treatments.

3. A tread rubber composition as claimed in claim 1 or 2, characterized in that said composition further comprises a diene rubber.

4. A tread rubber composition as claimed in claim 3, characterized in that said diene rubber is an emulsion-polymerized styrene-butadiene copolymer rubber having a high content of bound styrene and a glass transition temperature Tg of not less than −60°C.

5. A tread rubber composition as claimed in any of claims 1 to 4, characterized in that said copolymer of an aromatic vinyl compound and a conjugated diene is previously treated with at least 30% by weight of an extender oil so as to have a Mooney viscosity ($ML_{1+4}^{100°C}$) of 20—100 after the oil extension.

6. A tread rubber composition as claimed in any of claims 1 to 5, characterized in that said composition exhibits a ratio of dynamic modulus at 100°C to dynamic modulus at 20°C of not less than 0.20 after vulcanization.

**Patentansprüche**

1. Kautschukmischung für Hochleistungs-Rennreifen enthaltend als Kautschukkomponente zumindest 10 Gew.-% eines mit Öl gestreckten Copolymeren einer aromatischen Vinylverbindung und eines konjugierten Diens, wobei das ölgestreckte Copolymer einen Anteil an aromatischen Vinylbindungen von 10 bis 50 Gew.-% une einen Anteil an Vinylbindungseinheit in dem ganzen dienpolymerisierten Teil von 30 bis 80% aufweist und wobei das ölgestreckte Copolymere erhalten worden ist durch

(a) Copolymerisation einer vinylaromatischen Verbindung mit einem konjugierten Dien in Gegenwart eines Kohlenwasserstoff-Lösungsmittels und eines Ethers oder tertiären Amins unter Verwendung einer Organolithiumverbindung als Polymerisationsinitiator und

(b) Zugabe von mindestens 30 Gew.-% eines Strecköls zu dem aus (a) erhaltenen Copolymeren vor dem Kneten, wobei die Kautschukmischung für die Lauffläche erhalten wird durch Zugabe weiteren Strecköls während des Knetens derart, daß die erhaltene Kautschukmischung für die Lauffläche 50 bis 200 Gew.-Teile Strecköl, bezogen auf 100 Gew.-Teile Kautschukkomponente, enthälte.

2. Kautschukmischung nach Anspruch 1, dadurch gekennzeichnet, daß die Stufe (b) nach der Copolymerisation und vor der Entfernung des Lösungsmittels und Trocknung vorgenommen wird.

3. Kautschukmischung nach Anspruch 1 oder 2, dadurch gekennzeichnet, daß sie zusätzlich einen Dienkautschuk enthält.

4. Kautschukmischung nach Anspruch 3, dadurch gekennzeichnet, daß der Dienkautschuk ein emulsionspolymerisiertes Styrol/Butadien-Copolymer mit einem hohen Gehalt an Styrolbindungen und einer Glasübergangstemperatur Tg von nicht weniger als −60°C ist.

5. Kautschukmischung nach einem der Ansprüche 1 bis 4, dadurch gekennzeichnet, daß das Copolymere der vinylaromatischen Verbindung und des konjugierten Diens vorerst mit zumindest 30 Gew.-% eines Strecköls behandelt worden ist, daß es nach der Verstreckung mit Öl eine Mooney-Viskosität $ML_{1+4}$ bei 100°C von 20 bis 100 hat.

6. Kautschukmischung nach einem der Ansprüche 1 bis 5, dadurch gekennzeichnet, daß deren

# EP 0 171 935 B1

Verhältnis des dynamischen Moduls bei 100°C zum dynamischen Modul bei 20°C nach der Vulkanisation nicht weniger als 0,20 beträgt.

## Revendications

1. Une composition à base de caoutchouc pour bandes de roulement pour pneumatiques de course à haute performance, comprenant, comme composant à base de caoutchouc, au moins 10% en poids d'un copolymère dilué à l'huile d'un composé vinylique aromatique et d'un diène conjugué, dans laquelle ledit polymère étendu à l'huile présente une teneur en vinyle aromatique lié de 10 à 50% en poids et une teneur en motif de liaison vinylique dans la partie totale polymérisée du diène de 30 à 80%, et dans laquelle ledit copolymère étendu à l'huile est obtenu en:

(a) copolymérisant un composé aromatique vinylique et un diène conjugué en présence d'un solvant à base d'hydrocarbure et d'un éther ou d'une amine tertiare en utilisant un composé d'organolithium comme amorceur de polymérisation, et

(b) ajoutant au copolymère résultant de (a), avant le malaxage, au moins 30% en poids d'une huile diluante, ladite composition à base de caoutchouc pour bande de roulement étant obtenue en ajoutant, pendant le malaxage, une huile diluante supplémentaire de sorte que la composition à base de caoutchouc résultante pour bande de roulement contienne un total de 50 à 200 parties en poids d'une huile diluante en se basant sur 100 parties en poids des constituants à base de caoutchouc.

2. Une composition à base de caoutchouc pour bande de roulement telle que revendiquée dans la revendication 1, caractérisée en ce que le stade (b) est mis en oeuvre après la copolymérisation et avant les traitements de désolvatation et de séchage.

3. Une composition à base de caoutchouc pour bande de roulement telle que revendiquée dans la revendication 1 ou 2, caractérisée en ce que ladite composition comprend en outre un caoutchouc diénique.

4. Une composition à base de caoutchouc pour bande de roulement telle que revendiquée dans la revendication 3, caractérisée en ce que ledit caoutchouc diénique est un caoutchouc à copolymère styréne-butadiène polymérisé en émulsion, présentant une teneur élevée de styrène lié et un point de transition vitreuse Tg qui n'est pas inférieur à −60°C.

5. Une composition à base de caoutchouc pour bande de roulement telle que revendiquée dans l'une quelconque des revendications 1 à 4, caractérisée en ce que ledit copolymère d'un composé aromatique vinylique et d'un diène conjugué est traité au préalable avec au moins 30% en poids d'une huile diluante de façon à obtenir une viscosité Mooney $(ML^{100°}_{1+4})$ de 20 à 100 après la dilution à l'huile.

6. Une composition à base de caoutchouc pour bande de roulement telle que revendiquée dans l'une quelconque des revendications 1 à 5, caractérisée en ce que ladite composition présente un rapport du module dynamique à 100°C au module dynamique à 20°C qui n'est pas inférieur à 0,20 aprés vulcanisation.